# EUROPÄISCHE PATENTANMELDUNG

(11) **EP 3 722 772 A1**
(43) Veröffentlichungstag der Anmeldung: **14.10.2020**
(21) Anmeldenummer: 19168425.7
(22) Anmeldetag: 10.04.2019
(51) Int. Cl.: G01M 5/00

(54) **PRÜFSTAND UND PRÜFVERFAHREN FÜR EIN WINDENERGIEANLAGENROTORBLATT**

(71) Anmelder: Nordex Energy GmbH, 22419 Hamburg (DE)
(72) Erfinder: Elsner, Marc, 18055 Rostock (DE); Rautmann, Christof, 22419 Hamburg (DE)
(74) Vertreter: Hauck Patentanwaltspartnerschaft mbB

(57) **Zusammenfassung**

Prüfstand für ein Windenergieanlagenrotorblatt, mit
• einem Träger, an dem ein Windenergieanlagenrotorblatt derart befestigt werden kann, dass es eine Schwingung ausführen kann, und
• einer Anregungseinrichtung, die dazu ausgebildet ist, das an dem Träger befestigte Windenergieanlagenrotorblatt zu einer Schwingung anzuregen und/oder eine Schwingung des an dem Träger befestigten Windenergieanlagenrotorblatts zu unterstützen, wobei
• die Anregungseinrichtung Mittel zum Erzeugen einer Luftströmung aufweist, die eine Kraft auf ein an dem Träger befestigtes Windenergieanlagenrotorblatt ausübt.

## Beschreibung

Die Erfindung betrifft einen Prüfstand für ein Windenergieanlagenrotorblatt mit einem Träger, an dem ein Windenergieanlagenrotorblatt befestigt wird, und einer Anregungseinrichtung, mit der das Windenergieanlagenrotorblatt zu einer Schwingung angeregt wird. Die Erfindung betrifft außerdem ein entsprechendes Prüfverfahren.

Windenergieanlagenrotorblätter sind im Betrieb großen und ständig wechselnden Belastungen ausgesetzt. Sie werden so ausgelegt, dass sie diesen Belastungen für mindestens 20 Jahre standhalten. Um zu prüfen, ob ein Windenergieanlagenrotorblatt den Anforderungen entspricht, können die im Betrieb auftretenden Belastungen simuliert werden. Hierzu hat es sich bewährt, ein zu prüfendes Windenergieanlagenrotorblatt mithilfe eines Prüfstands der eingangs genannten Art in eine Schwingung zu versetzen. Die Schwingung kann für einen längeren Zeitraum von beispielsweise mehreren Wochen oder Monaten aufrechterhalten werden. Während der Schwingung und/oder danach wird das Windenergieanlagenrotorblatt auf Beschädigungen untersucht. Entspricht die simulierte Belastung der im realen Betrieb zu erwartenden und weist das Windenergieanlagenrotorblatt keine relevanten Beschädigungen auf, dann kann davon ausgegangen werden, dass das Windenergieanlagenrotorblatt alle Anforderungen erfüllt.

Aus dem Stand der Technik sind unterschiedliche Prüfstände und Prüfverfahren für Windenergieanlagenrotorblätter bekannt geworden. Beispielsweise beschreibt die Druckschrift EP 2 674 740 A1 eine Anregungseinrichtung mit einem Rahmen zur Befestigung an dem Windenergieanlagenrotorblatt. An dem Rahmen sind mehrere mit Gewichten versehene Arme drehbar gelagert. Die in Rotation versetzten Arme üben über den Rahmen eine periodische Kraft auf das Windenergieanlagenrotorblatt aus, sodass es in eine Schwingung versetzt wird.

Aus der Druckschrift WO 2013/143638 A1 ist ein Prüfstand mit einem Träger bekannt geworden, an dem das Windenergieanlagenrotorblatt horizontal oberhalb eines Bodens befestigt wird. Am Hallenboden angeordnet ist außerdem eine Wippe, die mit einer in Rotation versetzten Exzentermasse in eine Schwingung versetzt wird. Von einem Ende der Wippe wird die Schwingung auf einen an dem Windenergieanlagenrotorblatt befestigten Rahmen übertragen.

Aus der Druckschrift EP 2 741 069 B1 ist ein Prüfstand mit einem Träger bekannt geworden, an dem das zu prüfende Windenergieanlagenrotorblatt in horizontaler Anordnung befestigt wird. Eine Anregungseinrichtung übt mithilfe einer am Boden befestigten Seilwinde und einem flexiblen Zugmittel Zugkräfte auf das Windenergieanlagenrotorblatt aus, die dieses in eine Schwingung versetzen.

Aus der Druckschrift EP 2 379 878 B2 ist bekannt geworden, ein in eine Schwingung versetztes Windenergieanlagenrotorblatt mit einer speziellen Verkleidung zu versehen, die den Luftwiderstand des Windenergieanlagenrotorblatts in Schlagrichtung verringert.

Davon ausgehend ist es die Aufgabe der Erfindung, einen Prüfstand für ein Windenergieanlagenrotorblatt zur Verfügung zu stellen, mit dem die im Betrieb auftretenden Belastungen unter besonders praxisnahen Bedingungen simuliert werden können, sowie ein entsprechendes Prüfverfahren.

Diese Aufgabe wird gelöst durch den Prüfstand mit den Merkmalen des Anspruchs 1 und das Prüfverfahren mit den Merkmalen des Anspruchs 12. Vorteilhafte Ausgestaltungen sind in den sich jeweils anschließenden Unteransprüchen angegeben.

Der Prüfstand ist für ein Windenergieanlagenrotorblatt bestimmt und hat
- einen Träger, an dem ein Windenergieanlagenrotorblatt derart befestigt werden kann, dass es eine Schwingung ausführen kann, und
- eine Anregungseinrichtung, die dazu ausgebildet ist, das an dem Träger befestigte Windenergieanlagenrotorblatt zu einer Schwingung anzuregen und/oder eine Schwingung des an dem Träger befestigten Windenergieanlagenrotorblatts zu unterstützen, wobei
- die Anregungseinrichtung Mittel zum Erzeugen einer Luftströmung aufweist, die eine Kraft auf ein an dem Träger befestigtes Windenergieanlagenrotorblatt ausübt.

Der Prüfstand befindet sich in der Regel in einem Gebäude, beispielsweise in einer Halle, sodass die Prüfung unter kontrollierten Bedingungen vorgenommen werden kann. Der Träger weist eine hohe Standfestigkeit auf. Hierzu kann er insbesondere an einem Boden des Gebäudes befestigt sein. Der Träger kann eine Aufnahme für das Windenergieanlagenrotorblatt aufweisen, damit das Windenergieanlagenrotorblatt einfach an dem Träger befestigt werden kann. Vorzugsweise wird hierzu ein an einer Blattwurzel des Windenergieanlagenrotorblatts ausgebildeter Blattanschluss verwendet. Dieser umfasst beispielsweise eine Vielzahl von Gewindebohrungen oder Gewindebolzen, die mit der Aufnahme verschraubt werden. Insbesondere kann das Windenergieanlagenrotorblatt auf die gleiche Art und Weise an dem Träger befestigt werden, in der es im regulären Betrieb an der Nabe eines Rotors einer Windenergieanlage befestigt wird.

Eine Längsachse des Windenergieanlagenrotorblatts, das an dem Träger befestigt ist, kann insbesondere im Wesentlichen horizontal angeordnet sein. Eine Profilsehne des Windenergieanlagenrotorblatts kann ebenfalls im Wesentlichen horizontal angeordnet sein, sodass eine Schwingung des Windenergieanlagenrotorblatts in Schlagrichtung im Wesentlichen in einer vertikalen Richtung erfolgt. Dann kann eine Druckseite des Windenergieanlagenrotorblatts nach oben und eine Saugseite nach unten weisen, oder umgekehrt. In jedem Fall wird die Anordnung des Windenergieanlagenrotorblatts so gewählt, dass es die für die Prüfung vorgesehene Schwingung ausführen kann, ohne mit einem Boden des Gebäudes oder sonstigen Gegenständen zu kollidieren. Dies kann einen Freiraum von mehreren Metern um das schwingende Ende des Windenergieanlagenrotorblatts herum erfordern.

Außerdem weist der Prüfstand eine Anregungseinrichtung auf, mit der ein an dem Träger befestigtes Windenergieanlagenrotorblatt zu einer Schwingung angeregt werden kann. Die Anregungseinrichtung ist so ausgeführt, dass die bei der Schwingung des Windenergieanlagenrotorblatts auftretenden Verformungen den im realen Betrieb auftretenden schadensäquivalenten Lasten entsprechen. Bei Windenergieanlagenrotorblättern von heute üblicher Größe, mit einer Länge von beispielsweise 40 m oder mehr, kann dies eine Auslenkung der Blattspitze aus einer Ruhelage von mehreren Metern erfordern. Um eine solche Schwingung zu erzeugen und über einen längeren Zeitraum aufrechtzuerhalten, muss die Anregungseinrichtung eine hinreichend große Leistung, die beispielsweise mehrere 10 kW betragen kann, aufweisen.

Bei der Erfindung weist die Anregungseinrichtung Mittel zum Erzeugen einer Luftströmung auf, die eine Kraft auf das Windenergieanlagenrotorblatt ausübt. Die Kraft kann das Windenergieanlagenrotorblatt aus einer Ruhelage auslenken oder eine bereits vorhandene Auslenkung des Windenergieanlagenrotorblatts verstärken und dadurch eine Schwingungsanregung bewirken bzw. eine bereits vorhandene Schwingung unterstützen. Die Wirkung der Luftströmung kann auch darin bestehen, dass ein Luftwiderstand, den das schwingende Windenergieanlagenrotorblatt erfährt, reduziert wird, indem die zwischen dem schwingenden Windenergieanlagenrotorblatt und der umgebenden Luft auftretenden Relativgeschwindigkeiten verringert werden. In diesem Fall mindert die von der Luftströmung auf das Windenergieanlagenrotorblatt ausgeübte Kraft eine aerodynamische Dämpfung der Schwingung. Unter Umständen kann die Schwingung daher mit geringerem Energiebedarf aufrechterhalten werden. Insgesamt bewirkt die Luftströmung somit eine Anregung, Aufrechterhaltung oder Verstärkung einer Schwingung und/oder schwächt ein Abklingen einer Schwingung ab.

Bevorzugt wird die Prüfung an einem vollständigen Windenergieanlagenrotorblatt ausgeführt. Es ist jedoch auch möglich, die Prüfung auf einen bestimmten Abschnitt des Windenergieanlagenrotorblatts zu beschränken, insbesondere durch Abschneiden einer Blattspitze oder eines blattspitzennahen Längsabschnitts des Windenergieanlagenrotorblatts.

In einer Ausgestaltung sind die Mittel zum Erzeugen der Luftströmung so angeordnet, dass die Luftströmung auf eine aerodynamische Fläche eines an dem Träger befestigten Windenergieanlagenrotorblatts einwirkt. Die aerodynamische Fläche befindet sich an einer Außenseite des Windenergieanlagenrotorblatts, die im regulären Betrieb des Windenergieanlagenrotorblatts der umgebenden Luftströmung ausgesetzt ist. Insbesondere kann es sich um eine Saugseite oder eine Druckseite oder einen Ausschnitt davon handeln. Die aerodynamische Fläche, auf die die Luftströmung einwirkt, kann sich über einen vorgegebenen Längsabschnitt des Windenergieanlagenrotorblatts erstrecken, beispielsweise mit einer Länge im Bereich von 1 % bis 50 % oder 2 % bis 20 % der Gesamtlänge des Windenergieanlagenrotorblatts. Der Längsabschnitt kann nahe einer Blattspitze des Windenergieanlagenrotorblatts und/oder in einer äußeren Hälfte oder einem äußeren Drittel oder einem äußeren Viertel des Windenergieanlagenrotorblatts angeordnet sein. Dementsprechend können die Mittel zum Erzeugen der Luftströmung in einem Abstand von dem Träger angeordnet sein, der beispielsweise der Hälfte der Gesamtlänge eines zu prüfenden Windenergieanlagenrotorblatts entspricht, also zum Beispiel 20 m oder mehr beträgt.

Die Einwirkung der Luftströmung auf die aerodynamische Fläche führt zu der auf das Windenergieanlagenrotorblatt einwirkenden Kraft, deren Wirkungen vorstehend beschrieben sind. Die Schwingungsanregung mit Hilfe einer auf eine aerodynamische Fläche des Windenergieanlagenrotorblatts einwirkenden Luftströmung zu erzielen, weist zwei wesentliche Vorteile auf. Zum einen kommt die Anregungseinrichtung unter Umständen ohne eine mechanische Befestigung an dem Windenergieanlagenrotorblatt aus. Dies gilt insbesondere für die Mittel zum Erzeugen der Luftströmung, die beispielsweise am Boden einer Halle, in der sich der Prüfstand befindet, befestigt werden können. Die aus dem Stand der Technik bekannten Lösungen, bei denen ein Rahmen oder zumindest eine Befestigung für ein Zugmittel an dem Windenergieanlagenrotorblatt befestigt werden, führen stets zu einer Beeinflussung des dynamischen Verhaltens des Windenergieanlagenrotorblatts. Auch die aerodynamischen Eigenschaften des Windenergieanlagenrotorblatts werden durch eine solche Befestigung beeinflusst. Dies kann zur Folge haben, dass die Ergebnisse der Prüfung das Verhalten des Windenergieanlagenrotorblatts im realen Betrieb nicht hinreichend widerspiegeln. Zudem wirken die von der Luftströmung ausgeübten Kräfte nicht punktuell, sondern verteilt auf die gegebenenfalls relativ große aerodynamische Fläche. Auch aus diesem Grund bilden die simulierten Belastungen die in der Realität auftretenden besser ab.

In einer Ausgestaltung weisen die Mittel zum Erzeugen der Luftströmung einen Luftauslass und/oder einen Lufteinlass auf und es ist eine Befestigungseinrichtung vorhanden, die dazu ausgebildet ist, den Luftauslass und/oder den Lufteinlass an dem Windenergieanlagenrotorblatt zu befestigen. In diesem Fall kann die von der Luftströmung ausgeübte Kraft über die Befestigungseinrichtung auf das Windenergieanlagenrotorblatt übertragen werden. Insbesondere kann die aus einem Luftauslass ausströmende Luft eine Rückstoßkraft und/oder die in einen Lufteinlass einströmende Luft eine Saugkraft bewirken, die über die Befestigungseinrichtung in das Windenergieanlagenrotorblatt eingeleitet werden. Auch in diesem Fall kann durch diese Kräfte bzw. die jeweiligen Luftströmungen eine Anregung, Aufrechterhaltung oder Verstärkung einer Schwingung oder eine verringerte aerodynamische Dämpfung einer Schwingung erzielt werden. Die Mittel zum Erzeugen der Luftströmung können zusätzlich zu dem Luftauslass und/oder dem Lufteinlass einen oder mehrere Luftführungskanäle oder -schläuche aufweisen, die den Luftauslass und/oder den Lufteinlass mit einem Gebläse oder einer sonstigen Luftströmungsquelle verbinden. Der oder die Luftführungskanäle oder -schläuche können ganz oder teilweise an oder in dem Windenergieanlagenrotorblatt angeordnet und/oder befestigt sein. Das Gebläse oder eine sonstige Luftströmungsquelle kann ebenfalls ganz oder teilweise an oder in dem Windenergieanlagenrotorblatt angeordnet und/oder befestigt sein, aber auch davon entfernt, beispielsweise an dem Träger oder auf dem Boden einer Halle. Lufteinlass und Luftauslass können von getrennten Öffnungen oder von derselben Öffnung gebildet sein. Im letztgenannten Fall hängt die jeweilige Funktion der Öffnung von der Richtung der erzeugten Luftströmung ab. Lufteinlass und/oder Luftauslass können so angeordnet sein, dass eine hindurchgeleitete Luftströmung im Wesentlichen senkrecht zu einer Längsrichtung des Windenergieanlagenrotorblatts und zu einer Profilsehne des Windenergieanlagenrotorblatts gerichtet ist, also in Richtung einer beabsichtigten Schwingungsbewegung.

In einer Ausgestaltung weist die Anregungseinrichtung eine Steuerung auf, die dazu ausgebildet ist, einen zeitlichen Verlauf einer Richtung und/oder einer Geschwindigkeit der Luftströmung derart zu steuern, dass die Luftströmung eine Schwingungsanregung bewirkt. Auch hier schließt das Bewirken einer Schwingungsanregung ein Aufrechterhalten oder Verstärken einer Schwingung ein. Mit der Steuerung kann der zeitliche Verlauf der von der Luftströmung ausgeübten Kräfte auf die Schwingung abgestimmt werden. Durch ein Steuern der Richtung kann die Luftströmung beispielsweise so ausgebildet werden, dass sie nur in bestimmten Zeitintervallen auf die aerodynamische Fläche auftrifft. Ein Steuern der Geschwindigkeit der Luftströmung kann im einfachsten Fall durch ein Ein- und Ausschalten der Luftströmung realisiert werden, beispielsweise mit einer Intervallschaltung. In beiden Fällen Wirkung der Luftströmung so gesteuert werden, dass die gewünschte Schwingung erzielt wird.

In einer Ausgestaltung ist die Steuerung dazu ausgebildet, den zeitlichen Verlauf der Richtung und/oder der Geschwindigkeit der Luftströmung periodisch mit einer einstellbaren Frequenz zu steuern. Dadurch ist es möglich, die Frequenz auf eine Eigenfrequenz des Windenergieanlagenrotorblatts abzustimmen und so eine wirksame Schwingungsanregung zu erzielen.

In einer Ausgestaltung weist die Steuerung einen Sensor auf, der dazu ausgebildet ist, eine Position des Windenergieanlagenrotorblatts und/oder einen zeitlichen Verlauf einer Schwingung des Windenergieanlagenrotorblatts zu erfassen. Dadurch kann die Luftströmung so ausgestaltet werden, dass eine optimale Schwingungsanregung erzielt wird. Beispielsweise kann mit dem Sensor ein Nulldurchgang oder ein Umkehrpunkt des schwingenden Rotorblatts erfasst werden und mithilfe der Steuerung kann die erzeugte Luftströmung auf den jeweiligen Zeitpunkt abgestimmt werden. Darüber hinaus kann die Erfassung der Position des Windenergieanlagenrotorblatts auch als Regelgröße für eine Regelung der Schwingungsanregung ausgewertet werden, beispielsweise um eine Schwingung mit einer vorgegebenen Amplitude zu erzielen.

In einer Ausgestaltung weisen die Mittel zum Erzeugen einer Luftströmung erste Mittel zum Erzeugen einer ersten Luftströmung und zweite Mittel zum Erzeugen einer zweiten Luftströmung auf, wobei die ersten und zweiten Mittel getrennt voneinander steuerbar sind und die erste und zweite Luftströmung unterschiedliche Richtungen aufweisen. Auf diese Weise können besonders einfach zwei unterschiedliche Luftströmungen erzeugt werden, die eine gezielte Schwingungsanregung ermöglichen. Beispielsweise kann die erste Luftströmung auf eine Druckseite des Windenergieanlagenrotorblatts auftreffen und die zweite Luftströmung auf eine Saugseite des Windenergieanlagenrotorblatts. Alternativ können die beiden Luftströmungen aus unterschiedlichen Winkeln auf eine Profilnasenkante des Windenergieanlagenrotorblatts auftreffen, beispielsweise eine erste Luftströmung in einem Winkelbereich zwischen 0° und 45° zur Profilsehne und eine zweite Luftströmung in einem Winkelbereich zwischen -45° und 0° zur Profilsehne. In jedem Fall können die beiden Luftströmungen Kräfte in unterschiedliche Richtungen auf das Windenergieanlagenrotorblatt ausüben, was für eine wirksame Schwingungsanregung hilfreich ist. In Verbindung mit einer Steuerung können die ersten und zweiten Mittel insbesondere abwechselnd angesteuert werden, beispielsweise durch abwechselndes Aktivieren und Deaktivieren der ersten und zweiten Mittel. Mit vergleichbarer Wirkung können die ersten und zweiten Mittel eingesetzt werden, wenn ihnen jeweils ein Lufteinlass oder -auslass zugeordnet ist. In diesem Fall können Lufteinlass bzw. -auslass beispielsweise so angeordnet werden, dass die erste Luftströmung in Normalenrichtung zur Druckseite und die zweite Luftströmung in Normalenrichtung zur Saugseite ausgerichtet ist.

In einer Ausgestaltung weisen die Mittel zum Erzeugen der Luftströmung eine bewegliche Umlenkeinrichtung auf, mit der eine Richtung der Luftströmung steuerbar ist. Die bewegliche Umlenkeinrichtung kann beispielsweise eine Klappe sein, die in der Luftströmung angeordnet ist und deren Stellung für eine Richtung der sich ausbildenden Luftströmung maßgeblich ist. Ebenfalls möglich ist eine Umlenkeinrichtung in Form eines beweglichen Auslasses, beispielsweise eines Rohrabschnitts, einer Düse und/oder eines Trichters. Durch eine solche Umlenkeinrichtung kann wahlweise eine relativ geringfügige Beeinflussung der Richtung der Luftströmung erzielt werden, zum Beispiel in einem Winkelbereich von -45° bis 45° relativ zu einer Profilsehne oder in einem Winkelbereich von -25° bis +25° relativ zu einer Profilsehne. Die Umlenkeinrichtung kann jedoch auch so ausgebildet werden, dass die Luftströmung in einer ersten Stellung der Umlenkeinrichtung mit einer ersten Strömungsrichtung auf die aerodynamische Fläche des Windenergieanlagenrotorblatts auftrifft und in einer zweiten Stellung der Umlenkeinrichtung nicht auf die aerodynamische Fläche auftrifft, insbesondere weil sie im Wesentlichen senkrecht zu der ersten Strömungsrichtung umgelenkt wird. In diesem Fall kommt die Wirkung der Umlenkeinrichtung einem Abschalten der Luftströmung nahe. Es versteht sich, dass bei der Verwendung von ersten und zweiten Mitteln zum Erzeugen zweier unterschiedlicher Luftströmungen jede dieser beiden mit einer entsprechenden beweglichen Umlenkeinrichtung ausgestattet werden kann.

In einer Ausgestaltung weisen die Mittel zum Erzeugen der Luftströmung ein Gebläse auf. Das Gebläse kann insbesondere einen elektrischen Antrieb aufweisen. Mit einem Gebläse kann auf einfache Weise eine hinreichend starke Luftströmung erzeugt werden.

In einer Ausgestaltung weisen die Mittel zum Erzeugen der Luftströmung einen Kompressor auf. Der Kompressor kann einen Druckspeicher aufweisen oder mit einem externen Druckspeicher kombiniert werden, um einen Vorrat an Druckluft bereitzustellen. Aus dem Druckspeicher kann die Luft über Leitungen zu Austrittsöffnungen geleitet werden, aus denen die Luftströmung austritt. Wahlweise können in der Leitung und/oder in den Leitungen Absperrventile angeordnet sein, die von einer Steuerung der Anregungseinrichtung geöffnet und geschlossen werden können, um die Luftströmung in der gewünschten Weise zu steuern.

In einer Ausgestaltung weisen die Mittel zum Erzeugen der Luftströmung eine Ansaugöffnung auf, die auf einer der aerodynamischen Fläche, auf die die Luftströmung einwirkt, gegenüberliegenden Seite des Windenergieanlagenrotorblatts angeordnet ist. Mithilfe einer solchen Ansaugöffnung kann gezielt ein Unterdruck erzeugt werden, der zu der Schwingungsanregung beiträgt und/oder eine aerodynamische Dämpfung der Schwingung verringert. Der über die Ansaugöffnung erzeugte Unterdruck kann ebenso wie die Mittel zum Erzeugen der Luftströmung gesteuert werden, um die gewünschte Wirkung zu erzielen.

In einer Ausgestaltung weist die Anregungseinrichtung zusätzlich einen mechanisch an das Windenergieanlagenrotorblatt koppelbaren Schwingungserzeuger auf. Dabei kann es sich beispielsweise um einen Schwingungserzeuger mit einer Exzentermasse handeln, der an dem Windenergieanlagenrotorblatt befestigt wird oder der beispielsweise am Boden befestigt wird und über eine Koppelstange auf das Windenergieanlagenrotorblatt einwirkt. Ebenfalls möglich ist eine Verwendung von Zugmitteln, wie aus dem Stand der Technik bekannt. In allen Fällen trägt die zusätzliche Anregungseinrichtung zu der gewünschten Schwingungsanregung bei. Die eingangs geschilderten Vorteile werden dennoch für den von den Mitteln zum Erzeugen einer Luftströmung geleisteten Beitrag zur Schwingungsanregung oder verminderten aerodynamischen Dämpfung erreicht. Die für den Betrieb des zusätzlichen Schwingungserzeugers erforderliche Leistung ist darum geringer als bei einer ausschließlich mit einem mechanisch angekoppelten Schwingungserzeuger erzeugten Schwingung.

In einer Ausgestaltung ist an dem Prüfstand ein Windenergieanlagenrotorblatt befestigt. Das Windenergieanlagenrotorblatt kann insbesondere so befestigt sein, wie vorstehend beispielhaft erläutert.

Die oben angegebene Aufgabe wird ebenfalls gelöst durch das Prüfverfahren mit den Merkmalen des Anspruchs 12. Das Prüfverfahren ist für ein Windenergieanlagenrotorblatt bestimmt und weist die folgenden Schritte auf:
- Befestigen eines Windenergieanlagenrotorblatts an einem Träger,
- Erzeugen einer Luftströmung, die eine Kraft auf ein an dem Träger befestigtes Windenergieanlagenrotorblatt derart ausübt, dass das Windenergieanlagenrotorblatt zu einer Schwingung angeregt wird und/oder derart, dass eine Schwingung des Windenergieanlagenrotorblatts unterstützt wird.

Das Prüfverfahren kann insbesondere mit dem vorstehend erläuterten Prüfstand ausgeführt werden. Zu den Merkmalen und Vorteilen des Verfahrens wird auf die vorstehenden Erläuterungen verwiesen.

In einer Ausgestaltung wirkt die Luftströmung auf eine aerodynamische Fläche des Windenergieanlagenrotorblatts ein. Hierzu wird auf die vorstehenden Erläuterungen der korrespondierenden Merkmale des Prüfstands verwiesen, die entsprechend gelten.

In einer Ausgestaltung strömt die Luftströmung aus einem an dem Windenergieanlagenrotorblatt befestigten Luftauslass aus und/oder in einen an dem Windenergieanlagenrotorblatt befestigten Lufteinlass ein. Auch hierzu wird auf die vorstehenden Erläuterungen der korrespondierenden Merkmale des Prüfstands verwiesen, die entsprechend gelten.

In einer Ausgestaltung trifft die Luftströmung abwechselnd auf eine Druckseite und auf eine Saugseite des Windenergieanlagenrotorblatts auf. Hierzu wird auf die vorstehenden Erläuterungen der korrespondierenden Merkmale des Prüfstands verwiesen, die entsprechend gelten.

In einer Ausgestaltung trifft die Luftströmung auf eine Profilnasenkante des Windenergieanlagenrotorblatts auf und ein aerodynamisches Profil des Windenergieanlagenrotorblatts wird derart umströmt, dass ein Auftrieb erzeugt wird. Im Vergleich zu einem Auftreffen der Luftströmung auf Druckseite und/oder Saugseite kann durch das Erzeugen eines aerodynamischen Auftriebs mit einer vergleichsweise geringen Leistung der Luftströmung eine relativ große Kraft und damit eine besonders wirksame Schwingungsanregung erzielt werden. Beispielsweise kann die Luftströmung intervallweise geschaltet werden, sodass der Auftrieb immer dann entsteht, wenn sich das Windenergieanlagenrotorblatt in Richtung der Auftriebskraft bewegt, insbesondere wenn es eine Schwingungsbewegung in Richtung von einer Druckseite zu einer Saugseite des Windenergieanlagenrotorblatts hin ausführt. Es versteht sich jedoch, dass der Auftrieb auch in die entgegengesetzte Richtung wirken kann, wenn die Luftströmung so gerichtet ist, dass sich ein abweichender Anstellwinkel ergibt.

In einer Ausgestaltung wird eine Richtung der Luftströmung zeitlich so variiert, dass der Auftrieb stets in Richtung einer Schwingungsbewegung des Windenergieanlagenrotorblatts wirkt. In diesem Fall wird also durch gezieltes Steuern der Richtung der Luftströmung eine aerodynamische Auftriebskraft in wechselnde Richtungen erzeugt, was für eine wirksame Schwingungsanregung besonders günstig ist. Nachfolgend wird die Erfindung anhand von in Figuren dargestellten Ausführungsbeispielen näher erläutert. Es zeigen:
- Fig. 1: einen Prüfstand in einer schematischen Darstellung,
- Fig. 2: Mittel zum Erzeugen einer Luftströmung in einer schematischen Darstellung,
- Fig. 3: weitere Mittel zum Erzeugen einer Luftströmung in einer schematischen Darstellung, und
- Fig. 4: einen weiteren Prüfstand in einer schematischen Darstellung,
- Fig. 5: noch einen weiteren Prüfstand in einer schematischen Darstellung,
- Fig. 6: noch einen weiteren Prüfstand in einer schematischen Darstellung.

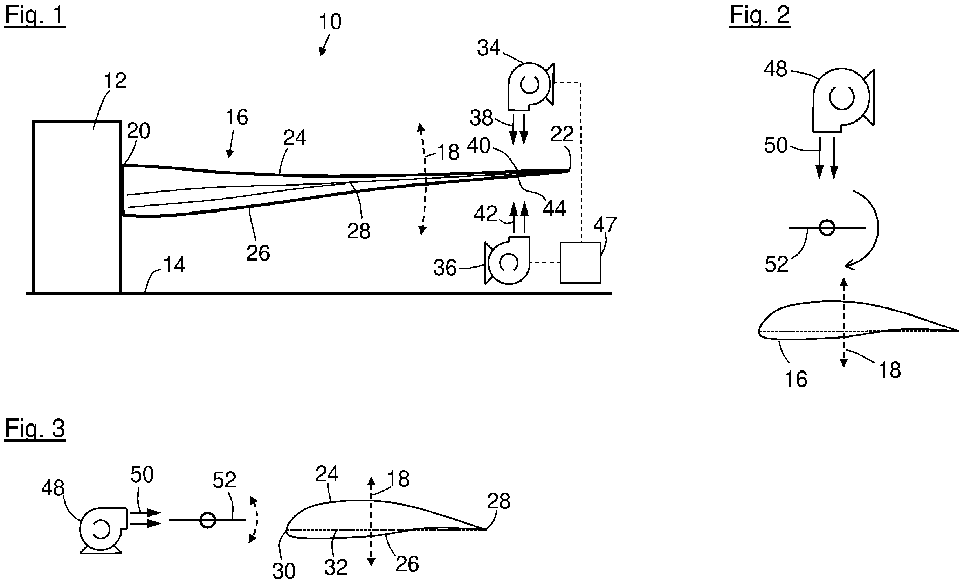

Der Prüfstand 10 aus Figur 1 weist einen Träger 12 auf, der auf dem Boden 14 einer Halle, in der sich der Prüfstand 10 befindet, montiert ist. An dem Träger 12 ist ein Windenergieanlagenrotorblatt 16 so befestigt, dass es eine Schwingung ausführen kann. Die Schwingungsbewegung wird durch einen Doppelpfeil 18 veranschaulicht.

Das Windenergieanlagenrotorblatt 16 weist eine Blattwurzel 20 auf, die einen nicht dargestellten Blattanschluss mit einer Vielzahl von Gewindebohrungen aufweist. Mittels ebenfalls nicht dargestellter Gewindebolzen, die in diese Gewindebohrungen eingeschraubt sind, ist das Windenergieanlagenrotorblatt 16 an dem Träger 12 befestigt.

Eine Längsachse des Windenergieanlagenrotorblatts 16 ist im Wesentlichen horizontal ausgerichtet. Sie verläuft in einem Abstand von mehreren Metern oberhalb des Bodens 14. Am der Blattwurzel 20 gegenüberliegenden Ende weist das Windenergieanlagenrotorblatt 16 eine Blattspitze 22 auf. Das Windenergieanlagenrotorblatt 16 ist so angeordnet, dass seine Saugseite 24 nach oben, seine Druckseite 26 nach unten weist. Der Blick ist auf die Profilendkante 28 gerichtet. Eine Profilnasenkante 30 (siehe Figur 3) befindet sich auf der vom Betrachter abgewandten Seite und ist über eine Profilsehne 32 (siehe Figur 3) mit der Profilendkante 28 verbunden. Die Profilsehne 32 ist im Wesentlichen horizontal ausgerichtet.

Eine Anregungseinrichtung zum Anregen einer Schwingung des Windenergieanlagenrotorblatts 16 umfasst Mittel zum Erzeugen einer Luftströmung mit einem ersten Gebläse 34 und einem zweiten Gebläse 36. Das erste Gebläse 34 ist oberhalb des Windenergieanlagenrotorblatts 16 angeordnet, sodass eine von ihm erzeugte erste Luftströmung 38 nach unten gerichtet ist und auf eine erste aerodynamische Fläche 40 auf der Saugseite 24 des Windenergieanlagenrotorblatts 16 nahe der Blattspitze 22 auftrifft. Das zweite Gebläse 36 ist unterhalb des Windenergieanlagenrotorblatts 16 angeordnet. Eine von ihm erzeugte, zweite Luftströmung 42 ist nach oben gerichtet, sodass sie auf eine zweite aerodynamische Fläche 44 auf der Druckseite 26 des Windenergieanlagenrotorblatts 16 auftrifft, ebenfalls nahe der Blattspitze 22.

Die Anregungseinrichtung weist außerdem eine Steuerung 47 auf, die mit dem ersten Gebläse 34 und dem zweiten Gebläse 36 verbunden ist und die den zeitlichen Verlauf der von diesen Gebläsen 34 und 36 erzeugten Luftströmungen 38, 42 steuert.

Zur Ausführung des Prüfverfahrens wird ein Windenergieanlagenrotorblatt 16 zunächst an dem Träger 12 befestigt, wie in Figur 1 dargestellt. Anschließend wird eine Schwingung des Windenergieanlagenrotorblatts mit Hilfe der Anregungseinrichtung angeregt. Hierzu kann die Steuerung 47 das erste Gebläse 34 und das zweite Gebläse 36 abwechselnd intervallweise aktivieren.

Während des Prüfverfahrens kann die Schwingung des Windenergieanlagenrotorblatts 16 von einer Bedienperson oder mithilfe geeigneter Sensoren automatisch überwacht werden. Während des Prüfverfahrens oder nachdem das Windenergieanlagenrotorblatt 16 die vorgesehene Belastung erfahren hat, wird das Windenergieanlagenrotorblatt 16 auf Beschädigungen untersucht.

Figur 2 zeigt Mittel zum Erzeugen einer Luftströmung mit einem Gebläse 48, bei dem es sich beispielsweise um das erste Gebläse 34 des Prüfstands 10 aus Figur 1 handeln kann. Das Gebläse 48 erzeugt eine in der Figur 2 nach unten weisende Luftströmung 50. Im Verlauf dieser Luftströmung 50 ist eine Umlenkeinrichtung in Form einer um eine durch einen Kreis angedeutete Achse schwenkbaren Klappe 52 angeordnet, die in der in Figur 2 gezeichneten Stellung senkrecht zur Richtung der Luftströmung 50 ausgerichtet ist und dadurch verhindert, dass die Luftströmung 50 auf ein unterhalb der Klappe 50 angeordnetes, im Querschnitt gezeigtes Windenergieanlagenrotorblatt 16 einwirkt. Stattdessen wird die Luftströmung 50 in der gezeichneten Stellung der Klappe 52 in im Wesentlichen horizontaler Richtung abgelenkt.

In einer nicht in der Figur 2 dargestellten, senkrecht ausgerichteten Stellung der Klappe 52 strömt die Luftströmung 50 im Wesentlichen ungehindert an der Klappe 52 vorbei, sodass sie auf ein unterhalb davon angeordnetes Windenergieanlagenrotorblatt 16 auftreffen und dieses zu einer Schwingung anregen kann, wie durch den Doppelpfeil 18 veranschaulicht.

Figur 3 zeigt eine Variante von Mitteln zum Erzeugen einer Luftströmung, die ebenfalls ein Gebläse 48 aufweist. Dieses kann mit dem Prüfstand 10 aus Figur 1 kombiniert werden und wahlweise das erste Gebläse 34 und das zweite Gebläse 36 ersetzen oder ergänzen. Das Gebläse 48 aus Figur 3 ist so angeordnet, dass die von ihm erzeugte Luftströmung 50 in horizontaler Richtung ausgerichtet ist und im Bereich einer Profilnasenkante 30 auf ein Windenergieanlagenrotorblatt 16, das in Figur 3 im Querschnitt gezeigt ist, auftrifft. Zwischen dem Gebläse 48 und dem Windenergieanlagenrotorblatt 16 ist auch hier eine Umlenkeinrichtung in Form einer Klappe 52 angeordnet. Bei der gezeichneten horizontalen Ausrichtung der Klappe 52 trifft die Luftströmung 50 im Wesentlichen ungehindert auf das Windenergieanlagenrotorblatt 16 auf. Durch eine Drehung der Klappe 52 um 90° kann dies verhindert werden, ähnlich wie bei dem zur Figur 2 geschilderten Vorgehen.

Davon abweichend ist es jedoch ebenfalls möglich, die Klappe 52 lediglich um einen kleineren Winkel, beispielsweise im Bereich zwischen 0° und 45°, in Richtung des Uhrzeigersinns oder entgegen dem Uhrzeigersinn zu rotieren und dadurch die Luftströmung 50 lediglich um einen bestimmten Winkelbereich aus der Horizontalen abzulenken. Die Luftströmung 50 trifft dann weiterhin auf das Windenergieanlagenrotorblatt 16 auf, wobei das aerodynamische Profil des Windenergieanlagenrotorblatts 16 von der Luftströmung 50 umströmt wird und einen Auftrieb erzeugt, der je nach Richtung der Luftströmung 50 nach oben oder nach unten wirken kann. Durch Steuern der Ausrichtung der Klappe 52 und/oder der Geschwindigkeit der von dem Gebläse 48 erzeugten Luftströmung 50 kann das Windenergieanlagenrotorblatt 16 gezielt zu einer Schwingung angeregt werden, wie durch den Doppelpfeil 18 veranschaulicht.

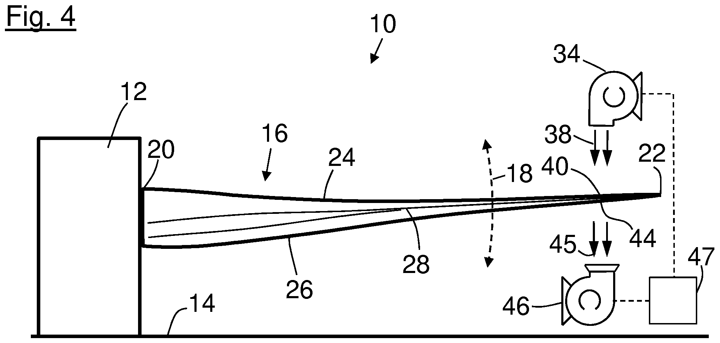

Figur 4 zeigt einen weiteren Prüfstand 10 in einer schematischen Darstellung, die derjenigen aus Figur 1 entspricht. Träger 12 und Windenergieanlagenrotorblatt 16 unterscheiden sich nicht von dem Beispiel der Fig. 1. Anstelle des zweiten Gebläses wird eine Absaugvorrichtung 46 eingesetzt, welche eine dritte Luftströmung 45 erzeugt, wobei auf der Druckseite 26 des Rotorblatts 16 Luft abgesaugt wird. Auf der Saugseite 24 ist wie im Ausführungsbeispiel der Figur 1 ein erstes Gebläse 34 oberhalb des Windenergieanlagenrotorblatts 16 angeordnet, sodass eine von ihm erzeugte erste Luftströmung 38 nach unten gerichtet ist und auf eine erste aerodynamische Fläche 40 auf der Saugseite 24 des Windenergieanlagenrotorblatts 16 nahe der Blattspitze 22 auftrifft. Die Luftströmung 38 trifft gepulst auf das Windenergieanlagenrotorblatt, so dass dieses in eine Schwingung versetzt wird. Die Absaugvorrichtung 46 auf der Druckseite unterstützt diesen Vorgang.

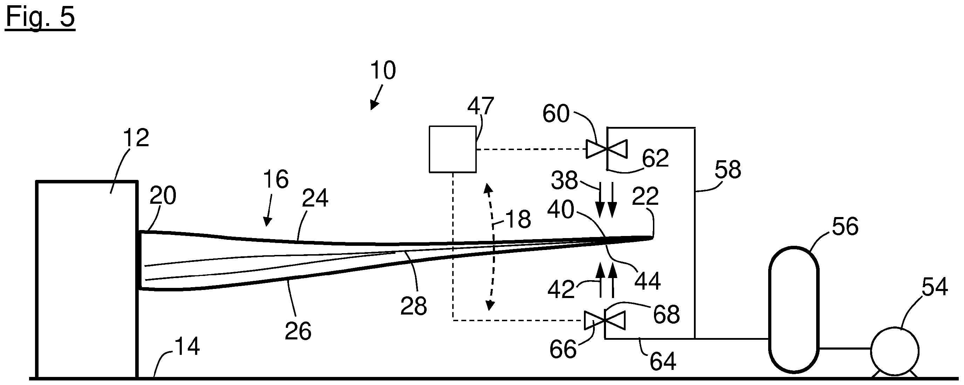

Figur 5 zeigt einen weiteren Prüfstand 10 in einer schematischen Darstellung, die derjenigen aus Figur 1 entspricht. Träger 12 und Windenergieanlagenrotorblatt 16 unterscheiden sich nicht von dem Beispiel der Fig. 1.

Im Unterschied zur Fig. 1 weist die Anregungseinrichtung in der Fig. 5 jedoch keine Gebläse 34, 36 auf, sondern einen Kompressor 54, mit dem ein Druckspeicher 56 mit Druckluft gefüllt wird. Vom Druckspeicher 56 führt eine erste Leitung 58 zu einem ersten Ventil 60 mit einem ersten Auslass 62 und eine zweite Leitung 64 zu einem zweiten Ventil 66 und einem zweiten Auslass 68. Bei geöffneten Ventilen 60, 66 werden erste und zweite Luftströmungen 38, 42 erzeugt, deren Ausrichtungen und Wirkungen denjenigen aus Fig. 1 gleicht.

Die im Beispiel der Fig. 5 vorgesehene Steuerung 47 ist mit den Ventilen 60, 66 verbunden und kann auf diese Weise die erste und zweite Luftströmung 38, 42 steuern.

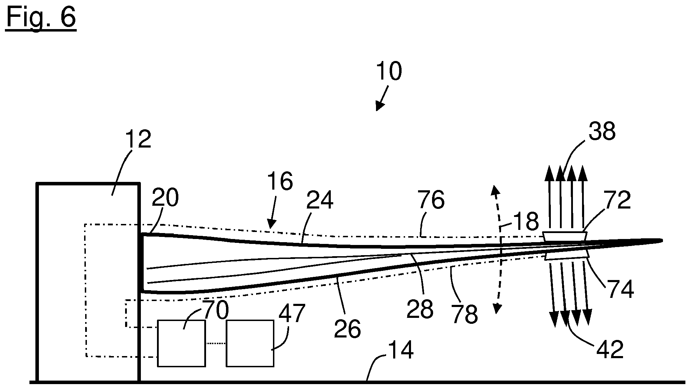

Figur 6 zeigt einen weiteren Prüfstand 10 in einer schematischen Darstellung, die derjenigen aus Figur 1 entspricht. Träger 12 und Windenergieanlagenrotorblatt 16 unterscheiden sich hinsichtlich Ihrer Funktion nicht von dem Beispiel der Fig. 1. Die Anregungseinrichtung umfasst in diesem Beispiel jedoch Mittel zum Erzeugen einer Luftströmung mit einem ersten Luftauslass 72 und einen zweitem Luftauslass 74. Der erste Luftauslass 72 ist über einen ersten Luftführungskanal 76, der zweite Luftauslass 74 über einen zweiten Luftführungskanal 78 mit einem Gebläse 70 verbunden. Eine Steuerung 47 steuert das Gebläse 70 so an, dass abwechselnd ein erster Luftstrom 38 aus dem ersten Luftauslass 72 und ein zweiter Luftstrom 42 aus dem zweiten Luftauslass 74 austreten, und zwar jeweils etwa in Normalenrichtung zur Saugseite 24 bzw. zur Druckseite 26. Die beiden Luftauslässe 72, 74 sind mit einer nicht gezeigten Befestigungseinrichtung an dem Windenergieanlagenrotorblatt 16 befestigt.

### Liste der Bezugszeichen:

- 10: Prüfstand
- 12: Träger
- 14: Boden
- 16: Windenergieanlagenrotorblatt
- 18: Doppelpfeil (Schwingung)
- 20: Blattwurzel
- 22: Blattspitze
- 24: Saugseite
- 26: Druckseite
- 28: Profilendkante
- 30: Profilnasenkante
- 32: Profilsehne
- 34: erstes Gebläse
- 36: zweites Gebläse
- 38: erste Luftströmung
- 40: erste aerodynamische Fläche
- 42: zweite Luftströmung
- 44: zweite aerodynamische Fläche
- 45: dritte Luftströmung
- 46: Absaugvorrichtung
- 47: Steuerung
- 48: Gebläse
- 50: Luftströmung
- 52: Klappe
- 54: Kompressor
- 56: Druckspeicher
- 58: erste Leitung
- 60: erstes Ventil
- 62: erster Auslass
- 64: zweite Leitung
- 66: zweites Ventil
- 68: zweiter Auslass
- 70: Gebläse
- 72: erster Luftauslass
- 74: zweiter Luftauslass
- 76: erster Luftführungskanal
- 78: zweiter Luftführungskanal

## Patentansprüche

1. Prüfstand (10) für ein Windenergieanlagenrotorblatt (16), mit
• einem Träger (12), an dem ein Windenergieanlagenrotorblatt (16) derart befestigt werden kann, dass es eine Schwingung ausführen kann, und
• einer Anregungseinrichtung, die dazu ausgebildet ist, das an dem Träger (12) befestigte Windenergieanlagenrotorblatt (16) zu einer Schwingung anzuregen und/oder eine Schwingung des an dem Träger (12) befestigten Windenergieanlagenrotorblatts (16) zu unterstützen, **dadurch gekennzeichnet, dass**
• die Anregungseinrichtung Mittel zum Erzeugen einer Luftströmung (38, 42, 50) aufweist, die eine Kraft auf ein an dem Träger (12) befestigtes Windenergieanlagenrotorblatt (16) ausübt.

2. Prüfstand (10) nach Anspruch 1, **dadurch gekennzeichnet, dass** die Mittel zum Erzeugen der Luftströmung (38, 42, 50) so angeordnet sind, dass die Luftströmung (38, 42, 50) auf eine aerodynamische Fläche (40, 44) eines an dem Träger (12) befestigten Windenergieanlagenrotorblatts (16) einwirkt.

3. Prüfstand (10) nach Anspruch 1, **dadurch gekennzeichnet, dass** die Mittel zum Erzeugen der Luftströmung (38, 42, 50) einen Luftauslass und/oder einen Lufteinlass aufweisen und dass eine Befestigungseinrichtung vorhanden ist, die dazu ausgebildet ist, den Luftauslass und/oder den Lufteinlass an dem Windenergieanlagenrotorblatt zu befestigen.

4. Prüfstand (10) nach einem der Ansprüche 1 bis 3, **dadurch gekennzeichnet, dass** die Anregungseinrichtung eine Steuerung (47) aufweist, die dazu ausgebildet ist, einen zeitlichen Verlauf einer Richtung und/oder einer Geschwindigkeit der Luftströmung (38, 42, 50) derart zu steuern, dass die Luftströmung (38, 42, 50) eine Schwingungsanregung bewirkt.

5. Prüfstand (10) nach Anspruch 4, **dadurch gekennzeichnet, dass** die Steuerung (47) dazu ausgebildet ist, den zeitlichen Verlauf der Richtung und/oder der Geschwindigkeit der Luftströmung (38, 42, 50) periodisch mit einer einstellbaren Frequenz zu steuern.

6. Prüfstand (10) nach Anspruch 4 oder 5, **dadurch gekennzeichnet, dass** die Steuerung (47) einen Sensor aufweist, der dazu ausgebildet ist, eine Position des Windenergieanlagenrotorblatts (16) und/oder einen zeitlichen Verlauf einer Schwingung des Windenergieanlagenrotorblatts (16) zu erfassen.

7. Prüfstand (10) nach einem der Ansprüche 1 bis 6, **dadurch gekennzeichnet, dass** die Mittel zum Erzeugen einer Luftströmung (38, 42, 50) erste Mittel zum Erzeugen einer ersten Luftströmung (38) und zweite Mittel zum Erzeugen einer zweiten Luftströmung (42) aufweisen, wobei die ersten und zweiten Mittel getrennt voneinander steuerbar sind und die erste und zweite Luftströmung (38, 42) unterschiedliche Richtungen aufweisen.

8. Prüfstand (10) nach einem der Ansprüche 1 bis 7, **dadurch gekennzeichnet, dass** die Mittel zum Erzeugen der Luftströmung (38, 42, 50) eine bewegliche Umlenkeinrichtung aufweisen, mit der eine Richtung der Luftströmung (50) steuerbar ist.

9. Prüfstand (10) nach einem der Ansprüche 1 bis 8, **dadurch gekennzeichnet, dass** die Mittel zum Erzeugen der Luftströmung ein Gebläse (34, 36, 48) oder einen Kompressor (54) aufweisen.

10. Prüfstand (10) nach einem der Ansprüche 2 oder 4 bis 9, **dadurch gekennzeichnet, dass** die Mittel zum Erzeugen der Luftströmung (38, 42, 50) eine Ansaugöffnung aufweisen, die auf einer der aerodynamischen Fläche (40, 44), auf die die Luftströmung (38, 42, 50) einwirkt, gegenüberliegenden Seite des Windenergieanlagenrotorblatts (16) angeordnet ist.

11. Prüfstand (10) nach einem der Ansprüche 1 bis 10, **dadurch gekennzeichnet, dass** die Anregungseinrichtung zusätzlich einen mechanisch an das Windenergieanlagenrotorblatt koppelbaren Schwingungserzeuger aufweist.

12. Prüfverfahren für ein Windenergieanlagenrotorblatt (16), mit den folgenden Schritten:
• Befestigen eines Windenergieanlagenrotorblatts (16) an einem Träger (12),
• Erzeugen einer Luftströmung (38, 42, 50), die eine Kraft auf das an dem Träger (12) befestigte Windenergieanlagenrotorblatt (16) derart ausübt, dass das Windenergieanlagenrotorblatt (16) zu einer Schwingung angeregt und/oder derart, dass eine Schwingung des an dem Träger (12) befestigten Windenergieanlagenrotorblatts (16) unterstützt wird.

13. Prüfverfahren nach Anspruch 12, **dadurch gekennzeichnet, dass** die Luftströmung (38, 42, 50) auf eine aerodynamische Fläche (40, 44) des an dem Träger (12) befestigten Windenergieanlagenrotorblatts (16) einwirkt.

14. Prüfverfahren nach Anspruch 12, **dadurch gekennzeichnet, dass** die Luftströmung aus einem an dem Windenergieanlagenrotorblatt befestigten Luftauslass ausströmt und/oder in einen an dem Windenergieanlagenrotorblatt befestigten Lufteinlass einströmt.

15. Prüfverfahren nach Anspruch 12 oder 13, **dadurch gekennzeichnet, dass** die Luftströmung (38, 42, 50) abwechselnd auf eine Druckseite (26) und auf eine Saugseite (24) des Windenergieanlagenrotorblatts (12) auftrifft. (in Beschreibung: abwechselnd ein-/ausströmt)

16. Prüfverfahren nach Anspruch 12 oder 13, **dadurch gekennzeichnet, dass** die Luftströmung (50) auf eine Profilnasenkante (30) des Windenergieanlagenrotorblatts (16) auftrifft und ein aerodynamisches Profil des Windenergieanlagenrotorblatts (16) derart umströmt, dass ein Auftrieb erzeugt wird, wobei insbesondere eine Richtung der Luftströmung (50) zeitlich so variiert wird, dass der Auftrieb stets in Richtung einer Schwingungsbewegung des Windenergieanlagenrotorblatts (16) wirkt.
